# EUROPEAN PATENT APPLICATION

(11) **EP 4 819 346 A1**
(43) Date of publication of application: **07.10.2026**
(21) Application number: 26168843.6
(22) Date of filing: 30.03.2026
(51) Int. Cl.: H01M 50/342, H01M 50/103

(54) **RECHARGEABLE BATTERY, CASE FOR RECHARGEABLE BATTERY, AND MANUFACTURING METHOD CASE FOR RECHARGEABLE BATTERY**

(30) Priority: 03.04.2025 KR 20250043720
(71) Applicant: Samsung SDI Co., Ltd., Yongin-si, Gyeonggi-do 17084 (KR)
(72) Inventor: KIM, Jooniee, Yongin-si, Gyeonggi-do 17084 (KR); CHOI, Jaeyeong, Yongin-si, Gyeonggi-do 17084 (KR); BAEK, Soomin, Yongin-si, Gyeonggi-do 17084 (KR); LEE, Yein, Yongin-si, Gyeonggi-do 17084 (KR)
(74) Representative: Meissner Bolte Partnerschaft mbB

(57) **Abstract**

A rechargeable battery (100) includes: a case (200) forming an internal space and having an opening (250); a cap plate (310) coupled to the opening (250) in the case (200); and an electrode assembly (400) in the internal space. The case (200) includes: a body (200A) having a flat surface (220) and a non-flat surface (210), the flat surface (220) facing the non-flat surface (210); a first notch (215) in the non-flat surface (210); and a gas discharge portion (211) in the non-flat surface (210) and overlapping the first notch (215). The non-flat surface (210) has a curved structure protruding in a direction away from the flat surface (220).

## Description

### BACKGROUND

### 1. Field

The present invention relates to a rechargeable battery, a case for a rechargeable battery, and a method for manufacturing a case for a rechargeable battery.

### 2. Description of the Related Art

In rechargeable batteries, gas is generated during the repeated charging and discharging process such that the pressure inside the rechargeable battery continuously increases, which may cause the rechargeable battery to swell. This swelling phenomenon may result in shorting of the rechargeable battery's lifespan, lowering of its capacity, performance degradation, and may even cause safety accidents, such as fire and explosion.

In this regard, a safety vent is often provided in the rechargeable battery, and if the pressure inside the rechargeable battery exceeds a reference pressure, the safety vent physically bursts to discharge the gas inside the rechargeable battery to the outside. Such safety vents are usually attached to the cap plate or case of a rechargeable battery by welding, etc.

The above-described information disclosed in the background art of this invention is for better understanding of the background of the present invention and, thus, may include information that does not constitute the related (or prior) art.

### SUMMARY

The present invention provides a rechargeable battery having a gas discharge portion that may be easily ruptured.

The present invention provides a case for the aforementioned rechargeable battery and a method of manufacturing the case.

However, aspects and features of the present invention are not limited to those described above, and other aspects and features not mentioned herein can be clearly understood by a person of an ordinary skill in the art from the description provided below.

A rechargeable battery includes a case forming an internal space and having an opening; a cap plate coupled to the opening in the case, and an electrode assembly in the internal space. The case includes a body having a flat surface and a non-flat surface, a first notch in the non-flat surface, and a gas discharge portion on the non-flat surface and overlapping the first notch. The non-flat surface is opposite to and protrudes in a direction away from the flat surface, and the non-flat surface has a curved structure.

The first notch may be in an interior surface of the non-flat surface, and the gas discharge portion may be on an exterior surface of the non-flat surface opposite to the interior surface of the non-flat surface.

The first notch may be at a highest point of the non-flat surface.

The first notch may extend from one end of the non-flat surface to another end in a length direction of the body.

A second notch may be in an exterior surface of the non-flat surface.

The second notch may extend from one end of the non-flat surface to anther end in a length direction of the body.

The second notch may overlap the first notch.

The gas discharge portion may be a part of the second notch.

The opening may be a first opening, and the case may have a second opening opposite to the first opening in the body. The cap plate may be a first cap plate coupled to the first opening, and a second cap plate may be coupled to the second opening. A negative electrode terminal electrically connected to a negative electrode of the electrode assembly may be at the first cap plate, and a positive electrode terminal electrically connected to a positive electrode of the electrode assembly may be at the second cap plate.

The electrode assembly may include a negative electrode tab and a positive electrode tab, which protrude in different directions with respect to each other and are electrically connected to the negative electrode terminal and the positive electrode terminal, respectively.

A case for a rechargeable battery includes a body having a first surface and a second surface opposite to each other, a third surface and a fourth surface opposite to each other, a first opening and a second opening opposite to each other, and form an internal space; a first notch in the first surface; and a gas discharge portion on the first surface and overlapping the first notch. One side of the first surface is connected to the third surface, another side of the first surface is connected to the fourth surface, one side of the second surface is connected to the third surface, and another side of the second surface is connected to the fourth surface, and the first surface protrudes in a direction away from the second surface and has a curved structure.

The first notch may be in an interior surface of the first surface, and the gas discharge portion may be on an exterior surface of the first surface opposite to the interior surface of the first surface.

The first notch may be at a highest point of the first surface.

The first notch may extend from one end of the first surface to another end in a length direction of the body.

A second notch may be on an exterior surface of the first surface.

The second notch may extend from one end of the first surface to another end in a length direction of the body.

A method of manufacturing a case for a rechargeable battery includes: extruding a metal plate to form a body having a first surface and a second surface facing each other, a third surface and a fourth surface facing each other, and a first notch in an interior surface of the first surface, the body forming an internal space and being open at both ends in a first direction; and forming a gas discharge portion by a press process, the gas discharge portion being on an exterior surface of the first surface and overlapping the first notch. In a process of extruding the metal plate, the first surface protrudes in a direction away from the second surface and has a curved structure.

The first notch may be formed at a highest point of the first surface.

According to embodiments of the present invention, a case portion of a rechargeable battery having a gas discharge portion is bent or curved, and a rupture pressure generated at that case portion facilitates rupture of the gas discharge portion.

### BRIEF DESCRIPTION OF THE DRAWINGS

The following drawings attached to this specification illustrate embodiments of the present invention and, together with the detailed description, explain and describe aspects and features of the present invention. Therefore, the present invention should not be interpreted as being limited to the matters illustrated in the drawings.
FIG. 1 is a perspective view schematically illustrating a rechargeable battery according to an embodiment of the present invention.
FIG. 2 is a cross-sectional view of the rechargeable battery shown in FIG. 1.
FIG. 3 is a perspective view schematically illustrating a case according to an embodiment of the present invention.
FIG. 4 is a cross-sectional view taken along the line IV-IV in FIG. 3.
FIG. 5 is a cross-sectional view taken along the line V-V in FIG. 3.
FIG. 6 to FIG. 10 are drawings illustrating a first surface of a case according to various embodiments of the present invention.
FIG. 11 is a drawing illustrating a method of manufacturing a case for a rechargeable battery according to an embodiment of the present invention.

### DETAILED DESCRIPTION

Hereinafter, various embodiments of the present invention will be described, in detail, with reference to the accompanying drawing such that a person of ordinary skill in the art can easily practice the present invention. The present invention may be implemented in many different forms and is not limited to the embodiments described herein.

To clearly explain aspects and features of the present invention, parts and configurations that are not relevant to the description or which are well understood by those of ordinary skill in the art are omitted or only briefly described, and identical or similar components are assigned the same reference numerals throughout the specification.

In addition, the size and thickness of each component shown in the drawings may be shown arbitrarily for convenience of explanation such the present invention is not necessarily limited to what is shown in the drawings. For example, in the drawings, the thickness of layers, films, panels, regions, etc., may be exaggerated for clarity. And in the drawings, for convenience of explanation, the thicknesses of some layers and regions may be exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. In addition, being "on" or "above" a reference element means being positioned on or below the reference element and does not necessarily mean being positioned "above" or "on" in a direction opposite to gravity.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

In addition, throughout the specification, when referring to "a plane view", it means that the target portion is viewed from above, and when referring to "a cross-section view", it means that a cross section of the target portion cut vertically is viewed from a side.

Also, in drawings, the symbols "x", "y", and "z" are used to represent directions, where "x" is a first direction, "y" is a second direction crossing (e.g., perpendicular to) the first direction, and "z" is a third direction crossing (e.g., perpendicular to) the first and second directions. The first direction x may correspond to a horizontal direction or left-right direction of the rechargeable battery or electrode assembly. The second direction y may correspond to a vertical direction or length direction of the rechargeable battery or electrode assembly. The third direction z may correspond to a thickness direction, height direction, or up-down direction of the rechargeable battery or electrode assembly.

A person of ordinary skill in the art would appreciate, in view of the present invention in its entirety, that each suitable feature of the various embodiments of the present invention may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

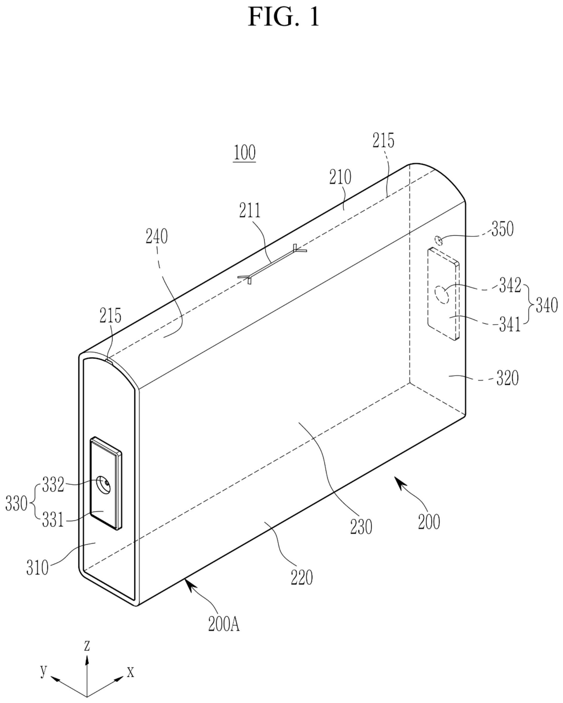

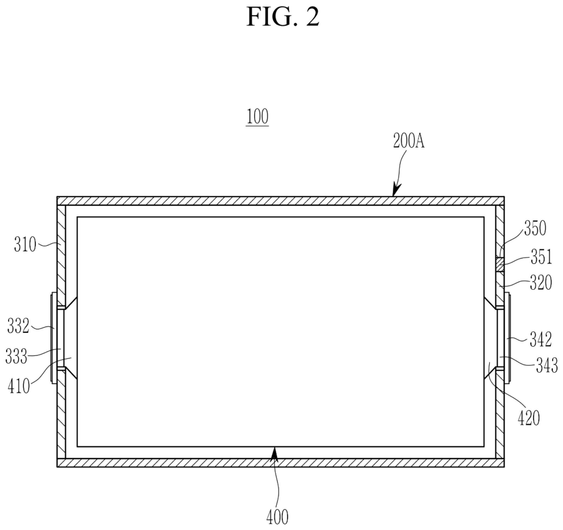

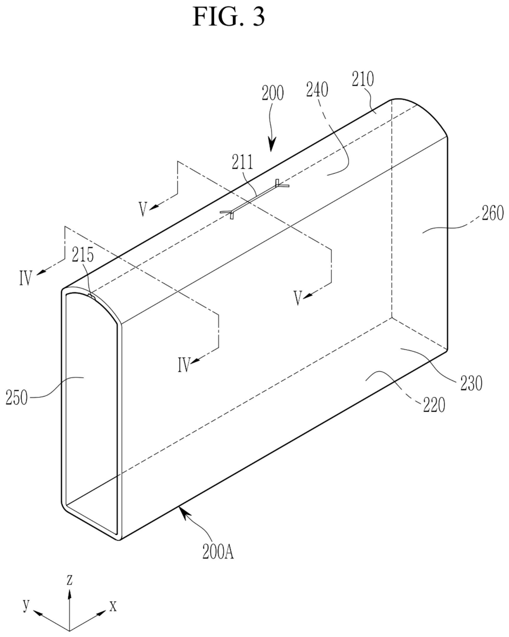

FIG. 1 is a perspective view schematically illustrating a rechargeable battery according to an embodiment of the present invention, FIG. 2 is a cross-sectional view of the rechargeable battery shown in FIG. 1, and FIG. 3 is a perspective view schematically illustrating a case according to an embodiment of the present invention.

Referring to FIG. 1 to FIG. 3, a rechargeable battery 100, according to the present embodiment, may include a case 200, a first cap plate 310, a second cap plate 320, and an electrode assembly 400.

The case 200 includes a body 200A having a first surface 210, a second surface 220, a third surface 230, and a fourth surface 240. The body 200A may have a tubular shape having (or forming) an internal space and a constant cross-sectional shape and elongated along (e.g., extending in) a first direction x. The body 200A may have a first opening 250 and a second opening 260 which are opposed to each other (e.g., which are at opposite ends of the body 200A). For example, the case 200 may have a structure with both ends open in the first direction x. The first direction x may be a length direction of the body 200A.

The first surface 210 and the second surface 220 may face each other in a third direction z, and the third surface 230 and the fourth surface 240 may face each other in a second direction y.

The first surface 210 may protrude opposite to the second surface 220 in the third direction z and may have a curved structure. For example, the first surface 210 may be a structure having a non-flat surface, and the second surface 220, the third surface 230, and the fourth surface 240 may be structures having flat surfaces. Meanwhile, in the present embodiment, the first surface 210 is described as being a curved structure, that is, a structure having a non-flat surface, but in some embodiments, the second surface 220 opposite to the first surface 210 may also have a curved structure.

One side of the first surface 210 is connected to (e.g., extends to) the third surface 230, and the other side of the first surface 210 is connected to (e.g., extends to) the fourth surface 240. One side of the second surface 220 is connected to (e.g., extends to) the third surface 230, and the other side of the second surface 220 is connected to (e.g., extends to) the fourth surface 240. The second surface 220 and the third surface 230 form approximately right angles, and the second surface 220 and the fourth surface 240 form approximately right angles.

A first notch 215 may be positioned at a highest point of the first surface 210 and may be extended from one end of the first surface 210 to the other end along the first direction x.

The gas discharge portion 211 may be positioned at a highest point of the first surface 210. The gas discharge portion 211 may be positioned in a center portion between one end and the other end of the first surface 210. The gas discharge portion 211 may overlap the first notch 215.

The first cap plate 310 and the second cap plate 320 face each other in the first direction x. The first cap plate 310 may be positioned at (or in) the first opening 250, and the second cap plate 320 may be positioned at (or in) the second opening 260. Accordingly, the first cap plate 310 and the second cap plate 320 are respectively coupled with the body 200A to seal the body 200A. Therefore, the electrode assembly 400 and electrolyte may be accommodated in the internal space formed by the body 200A, the first cap plate 310, and the second cap plate 320.

A negative electrode terminal 330 may be disposed on the first cap plate 310, and a positive electrode terminal 340 may be disposed on the second cap plate 320. The polarities of the negative and positive electrode terminals 330 and 340 may be reversed.

The negative electrode terminal 330 may include a first connection portion 331 and a first terminal plate 332, and a negative electrode tab 410 may be fixed to a first contact portion 333 connected to the first connection portion 331. The positive electrode terminal 340 may include a second connection portion 341 and a second terminal plate 342, and a positive electrode tab 420 may be fixed to a second contact portion 343 connected to the second connection portion 341.

Additionally, the negative electrode terminal 330 and the positive electrode terminal 340 may be insulated from the first cap plate 310 and the second cap plate 320, respectively, by an insulator.

An injection hole (e.g., an injection opening) 350 for injecting the electrolyte may be positioned at (e.g., may be in or may be formed in) the second cap plate 320, and a plug 351 may seal the injection hole 350.

The electrolytes may contain non-aqueous organic solvents and lithium salts.

The non-aqueous organic solvent acts as a medium through which the ions involved in the electrochemical reaction of the rechargeable battery can move. The non-aqueous organic solvents may be carbonate solvent, ester solvent, ether solvent, ketone solvent, alcohol solvent, aprotic solvents, or a combination thereof, and may be used alone or as a mixture of two or more. Also, when using a carbonate solvent, a mixture of cyclic carbonate and linear carbonate may be used.

The electrode assembly 400 may include at least one negative electrode tab 410 and at least one positive electrode tab 420, which protrude in different directions with respect to each other. The electrode assembly 400 may be formed by winding a laminate of a negative electrode plate, a separator, and a positive electrode plate, which are formed in a thin plate or film shape. Additionally, the electrode assembly 400 may be a stack type rather than a wound type, and the present invention does not limit the shape of the electrode assembly. Additionally, the electrode assembly 400 may be a Z-stack electrode assembly where a positive electrode plate and a negative electrode plate are inserted on both sides (e.g., opposite sides) of a separator, which is then folded in a Z-stack form. Additionally, the electrode assembly 400 may be housed within the case 200 by stacking one or more electrode assemblies with their long sides adjacent to each other, and the present invention does not limit the number of electrode assemblies.

The negative electrode plate may include a negative electrode current collecting plate and a negative electrode active material layer on the negative electrode current collecting plate. Additionally, the negative electrode plate may include a negative electrode tab 410, which is a region where the negative electrode active material layer is not present. In some embodiments, the negative electrode tab 410 may be formed by cutting the negative electrode plate to protrude to one side in advance when manufacturing the negative electrode plate or may protrude further to one side than the separator without separate cutting.

The negative electrode active material layer includes a negative electrode active material and may further include a binder and/or conductive material. The negative electrode active material layer may contain about 90 wt% to about 99 wt% of the negative electrode active material, about 0.5 wt% to about 5 wt% of the binder, and 0.5 wt% to about 5 wt% of the conductive material.

The negative electrode active material includes a material capable of reversibly intercalating/deintercalating lithium ions, a material capable of doping into and dedoping from lithium metal, an alloy of lithium metal, lithium, or a transition metal oxide.

The material capable of reversibly intercalating/deintercalating lithium ions may include a carbon-based negative electrode active material, for example, crystalline carbon, amorphous carbon, or a combination thereof. Examples of crystalline carbon may include graphite, such as natural graphite or artificial graphite, and examples of amorphous carbon may include soft carbon or hard carbon, mesophase pitch carbide, and calcined coke.

As the material capable of doping into and dedoping from lithium metal, an alloy of lithium metal, lithium, Si-based negative electrode active material, or Sn-based negative electrode active material may be used. The Si-based negative electrode active material may be silicon, silicon-carbon composite, SiOₓ (0 < x < 2), Si-based alloy, or combination thereof.

The silicon-carbon composite may be a composite of silicon and amorphous carbon. According to one embodiment, the silicon-carbon composite may be in a form of a silicon particle and amorphous carbon coated on the surface of the silicon particle.

The silicon-carbon composite may further contain crystalline carbon. For example, the silicon-carbon composite may include a core including crystalline carbon and silicon particles and an amorphous carbon coating layer on the surface of the core.

The binder may be a non-aqueous binder, an aqueous binder, a dry binder, or a combination thereof. The aqueous binder may further include a cellulose-based compound capable of providing viscosity.

The conductive material may include carbon-based materials, such as natural graphite, artificial graphite, carbon black, acetylene black, Ketjenblack^{®} (a registered trademark of Nouryon Chemicals International B.V.), which is a highly conductive carbon black, carbon fiber, carbon nanofiber, and carbon nanotube; metal-based materials, in a form of metal powder or metal fiber, including copper, nickel, silver and the like; conductive polymers, such as polyphenylene derivatives; or a mixture thereof.

As the negative electrode current collecting plate, a material selected from copper foil, nickel foil, stainless steel foil, titanium foil, nickel foam, copper foam, polymer substrate coated with conductive metal, and a combination thereof may be used.

The positive electrode plate may include a positive electrode current collecting plate and a positive electrode active material layer on the positive electrode current collecting plate. Also, the positive electrode plate may include a positive electrode tab 420, which is a region where the positive electrode active material layer is not present. In some embodiments, the positive electrode tab 420 may be formed by cutting to protrude to the other side in advance when manufacturing the positive electrode plate or may protrude further to the other side than the separator without separate cutting.

The positive electrode active material layer includes a positive electrode active material and may further include a binder and/or conductive material. The content of the positive electrode active material may be about 90 wt% to about 99 wt% with respect to 100 wt% of the positive electrode active material layer, and the contents of the binder and conductive material may be about 0.5 wt% to about 5 wt%, respectively, with respect to 100 wt% of the positive electrode active material layer.

A compound capable of reversible intercalation and deintercalation of lithium (lithiated intercalation compound) may be used as a positive electrode active material. For example, at least one of composite oxide of lithium and a metal selected from cobalt, manganese, nickel, and a combination thereof may be used.

The composite oxide may be a lithium transition metal composite oxide, and some specific examples thereof include lithium nickel oxide, lithium cobalt oxide, lithium manganese oxide, lithium phosphoric acid iron compound, cobalt-free nickel-manganese oxide, or a combination thereof.

As an example, a compound expressed by any of the following formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above formula, A is Ni, Co, Mn, or combination thereof; X is Al, Ni, Co, Mn, Cr, Fe, Mg, Sr, V, rare-earth element or combination thereof; D is O, F, S, P, or combination thereof; G is Al, Cr, Mn, Fe, Mg, La, Ce, Sr, V, or combination thereof; and L¹ is Mn, Al or combination thereof.

The binder may be a non-aqueous binder, an aqueous binder, a dry binder, or a combination thereof. The aqueous binder further includes a cellulose-based compound capable of providing viscosity.

The conductive material may include carbon-based materials, such as natural graphite, artificial graphite, carbon black, acetylene black, Ketjenblack^{®} (a registered trademark of Nouryon Chemicals International B.V.), which is a highly conductive carbon black, carbon fiber, carbon nanofiber, and carbon nanotube; metal-based materials, in a form of metal powder or metal fiber, including copper, nickel, silver and the like; conductive polymers, such as polyphenylene derivatives; or a mixture thereof.

Al may be used as the positive electrode current collecting plate but is not limited thereto.

The separator may include a porous substrate and a coating layer including an organic material, an inorganic material, or a combination thereof on one or both surfaces of the porous substrate.

The porous substrate may be a polymer film formed by any one polymer selected from polyolefins, such as polyethylene and polypropylene, polyester, such as polyethylene terephthalate and polybutylene terephthalate, polyacetal, polyamide, polyimide, polycarbonate, polyetherketone (PEEK), polyaryletherketone (PAEK), polyetherimide, polyamide-imide (PAI), polybenzimidazole, polyethersulfone, polyphenylene oxide, cyclic olefin copolymer, polyphenylene sulfide, polyethylene naphthalate, glass fiber, Polytetrafluoroethylene (PTFE) (also known as TEFLON), or a copolymer or mixture of two or more of those.

The organic material may include polyvinylidene fluoride-based polymer or a (meth)acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof but is not limited thereto.

The organic material and the inorganic material may be mixed in a single coating layer or in a form of lamination of a coating layer including organic material and a coating layer including inorganic material.

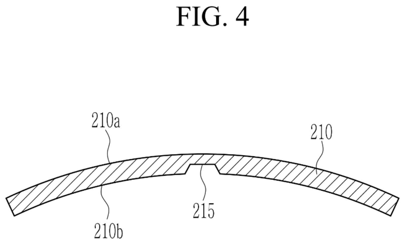

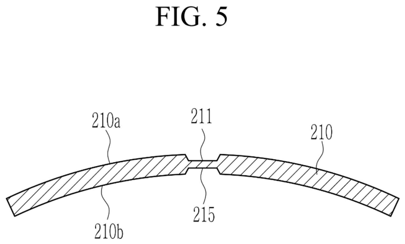

FIG. 4 is a cross-sectional view taken along the line IV-IV in FIG. 3, and FIG. 5 is a cross-sectional view taken along the line V-V in FIG. 3.

Referring to FIG. 4 and FIG. 5, the first notch 215 may be positioned on (or in) the interior surface 210b of the first surface 210 facing the second surface 220. This first notch 215 may have a trapezoidal cross-sectional shape. The cross-sectional shape of the first notch 215 is not necessarily limited to the trapezoidal shape.

The gas discharge portion 211 may be positioned on (or in) the exterior surface 210a of the first surface 210 and may overlap the first notch 215. The gas discharge portion 211 may be a notch having a trapezoidal cross-sectional shape. The gas discharge portion 211 may be formed integrally with the first surface 210 through a press process that applies a pressure to the exterior surface 210a of the first surface 210.

The gas discharge portion 211 is physically ruptured or broken (e.g., torn) to reduce internal pressure of the rechargeable battery 100 and to prevent an explosion of the rechargeable battery 100 when the internal pressure of the rechargeable battery 100 increases (or excessively increases). For example, the gas discharge portion 211 may be ruptured at a rupture pressure.

In the present embodiment, the first surface 210 has a curved structure. According to this structure, when the internal pressure of the rechargeable battery 100 exceeds a rupture pressure, the gas discharge portion 211 may be easily ruptured.

Also, during a process of manufacturing the case 200, the curvature of the first surface 210 may be adjusted. For example, the rupture pressure of the gas discharge portion 211 may be adjusted by adjusting the curvature of the first surface 210. Therefore, by adjusting the curvature of the first surface 210, a customer-desired rupture pressure of the gas discharge portion 211 can be achieved.

The gas discharge portion 211 is physically ruptured and is easily ruptured when it has a thickness thinner than that of the first surface 210. In the present embodiment, because the gas discharge portion 211 overlaps the first notch 215, the gas discharge portion 211 may have a thickness thinner than the first surface 210. Therefore, when the internal pressure of the rechargeable battery 100 exceeds a rupture pressure, the gas discharge portion 211 may be more easily ruptured.

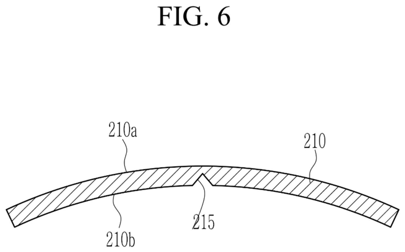

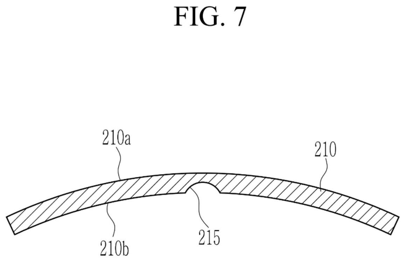

The first notch 215 may have various cross-sectional shapes. Some such example embodiments will be described with reference to FIG. 6 and FIG. 7.

FIG. 6 and FIG. 7 are drawings schematically illustrating a cross-section of the first surface of the case according to embodiments of the present invention, respectively.

Referring to FIG. 6, a first notch 215 is positioned on (or in) an interior surface 210b of the first surface 210, and the first notch 215 may have a triangular cross-sectional shape. Referring to FIG. 7, a first notch 215 is positioned on (or in) an interior surface 210b of the first surface 210, and the first notch 215 may have a semicircular cross-sectional shape.

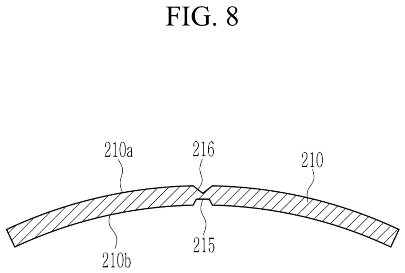

Additionally, the case 200, according to an embodiment of the present invention, may have two notches. Such embodiments will be described with reference to FIG. 8 to FIG. 10.

FIG. 8 to FIG. 10 are drawings schematically illustrating a cross-section of the first surface of the case according to various embodiments of the present invention, respectively.

Referring to FIG. 8 to FIG. 10, a first notch 215 may be positioned on (or in) an interior surface 210b of the first surface 210, and a second notch 216 may be positioned on (or in) an exterior surface 210a of the first surface 210. The first notch 215 and the second notch 216 may overlap each other.

Each of the first notch 215 and the second notch 216 may be positioned at a highest point of the first surface 210. Also, each of the first notch 215 and the second notch 216 may extend from one end of the first surface 210 to the other end thereof along the first direction x. The second notch 216 may be positioned at a center portion (or center position or area) between one end and the other end of the first surface 210, and a part of the second notch 216 may be the gas discharge portion 211.

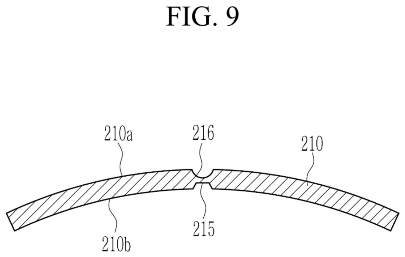

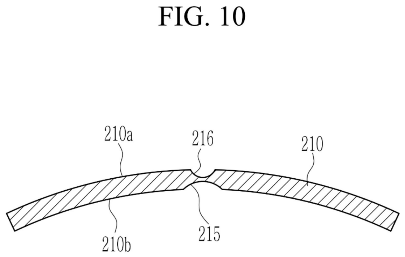

The first notch 215 and second notch 216 may have various cross-sectional shapes. Referring to FIG. 8, the first notch 215 may have a trapezoidal cross-sectional shape, and the second notch 216 may have an inverted triangular cross-sectional shape. Referring to FIG. 9, the first notch 215 may have a trapezoidal cross-sectional shape, and the second notch 216 may have a semicircular cross-sectional shape. Referring to FIG. 10, the first notch 215 may have a semi-elliptical cross-sectional shape, and the second notch 216 may have a semi-circular cross-sectional shape.

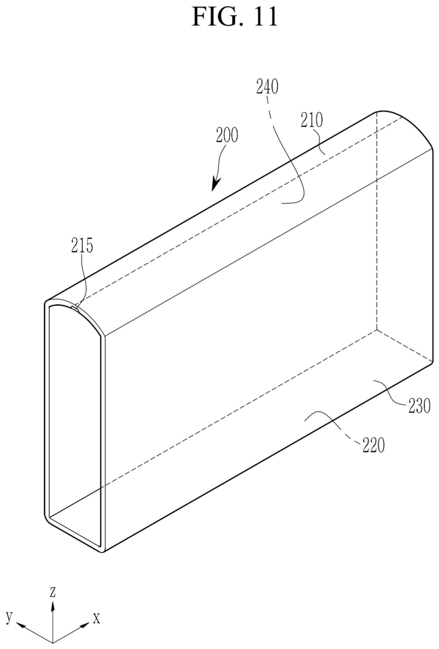

A method of manufacturing a case for a rechargeable battery according to an embodiment of the present invention will be described with reference to FIG. 3 and FIG. 11.

FIG. 11 is a drawing illustrating a method of manufacturing a case for a rechargeable battery according to an embodiment of the present invention.

Referring to FIG. 11, an extrusion process is performed on a metal plate (e.g., a metal plate is extruded) to form a body 200A having a tubular shape with a constant cross-sectional shape and which is elongated along the first direction x. The body 200A may have a first opening 250 and a second opening 260 which are opposed to each other. For example, the case 200 has (or forms) an internal space and may have a structure in which both ends (e.g., opposite ends) in the first direction x are open. The first direction x may be a length direction of the body 200A. Additionally, the metal plate may be an aluminum plate.

The body 200A has a first surface 210, a second surface 220, a third surface 230, and a fourth surface 240. The first surface 210 and the second surface 220 may face each other in a third direction z, and the third surface 230 and the fourth surface 240 may face each other in a second direction y.

The first surface 210 may protrude opposite to the second surface 220 in the third direction z and may have a curved structure.

The first notch 215 is positioned on (or in) the interior surface of the first surface 210, and the first notch 215 may be positioned at a highest point of the first surface 210. The first notch 215 may extend from one end of the first surface 210 to the other end thereof along the first direction x. The first notch 215 may be formed together when forming the case 200 by performing an extrusion process on the metal plate.

Next, referring to FIG. 3 again, a gas discharge portion 211 is formed through a press process that applies a pressure to the exterior surface of the first surface 210. The gas discharge portion 211 is formed to overlap the first notch 215. Accordingly, the body 200A may be integrally formed with the gas discharge portion 211. For example, the case 200 according to the present embodiment may be integrally formed with the gas discharge portion 211.

When a gas discharge portion is attached to a body by a welding process, deformation may occur due to the welding, and the rupture pressure of the gas discharge portion may be unevenly distributed across the body. In embodiments of the present invention, because the gas discharge portion 211 is integrally formed with the body 200A, problems caused by the welding process are avoided.

Although embodiments of the present invention have been described in detail above, the scope of the present invention is not limited thereto, and various modifications and improvements can be made by those skilled in the art using the basic concept of the present invention as defined in the following claims and their equivalents, that fall within the scope of the present invention.

### Description of Some Reference Symbols

| | | | |
|---|---|---|---|
| 100: | rechargeable battery | 200: | case |
| 200A: | body | 210: | first surface |
| 210a: | exterior surface | 210b: | interior surface |
| 211: | gas discharge portion | 215: | first notch |
| 216: | second notch | 220: | second surface |
| 230: | third surface | 240: | fourth surface |
| 250: | first opening | 260: | second opening |
| 310: | first cap plate | 320: | second cap plate |
| 330: | negative electrode terminal | 340: | positive electrode terminal |
| 350: | injection hole | 400: | electrode assembly |
| 410: | negative electrode tab | 420: | positive electrode tab |

## Claims

1. A rechargeable battery (100) comprising:
a case (200) forming an internal space, the case (200) having an opening (250);
a cap plate (310) coupled to the opening (250) in the case (200); and
an electrode assembly (400) in the internal space,
wherein the case (200) comprises:
a body (200A) having a flat surface (220) and a non-flat surface (210), the flat surface (220) facing the non-flat surface (210);
a first notch (215) in the non-flat surface (210); and
a gas discharge portion (211) in the non-flat surface (210) and overlapping the first notch (215), and
wherein the non-flat surface (210) has a curved structure protruding in a direction away from the flat surface (220).

2. The rechargeable battery (100) as claimed in claim 1, wherein:
the first notch (215) is in an interior surface (210b) of the non-flat surface (210); and
the gas discharge portion (211) is on an exterior surface (210a) of the non-flat surface (210) that is opposite to the interior surface (210b) of the non-flat surface (210), optionally wherein the first notch (215) is at a highest point of the non-flat surface (210).

3. The rechargeable battery (100) as claimed in claim 1 or 2, wherein the first notch (215) extends from one end of the non-flat surface (210) to another end along a length direction of the body (200A).

4. The rechargeable battery (100) as claimed in any one of the preceding claims, wherein a second notch (216) is in an exterior surface (210a) of the non-flat surface (210), optionally wherein the second notch (216) extends from one end of the non-flat surface (210) to another end along a length direction of the body (200A).

5. The rechargeable battery (100) as claimed in claim 4, wherein the second notch (216) overlaps the first notch (215), optionally wherein the gas discharge portion (211) is a part of the second notch (216).

6. The rechargeable battery (100) as claimed in any one of the preceding claims, wherein:
the opening (250) is a first opening (250);
the case (200) has a second opening (260) opposite to the first opening (250) in the body (200A);
the cap plate (310) is a first cap plate (310) coupled to the first opening (250);
a second cap plate (320) is coupled to the second opening (260);
a negative electrode terminal (330) electrically connected to a negative electrode of the electrode assembly (400) is at the first cap plate (310); and
a positive electrode terminal (340) electrically connected to a positive electrode of the electrode assembly (400) is at the second cap plate (320).

7. The rechargeable battery (100) as claimed in claim 6, wherein the electrode assembly (400) comprises a negative electrode tab (410) and a positive electrode tab (420), which protrude in different directions with respect to each other and are electrically connected to the negative electrode terminal (330) and the positive electrode terminal (340), respectively.

8. A case (200) for a rechargeable battery (100) comprising:
a body (200A) forming an internal space and having a first surface (210) and a second surface (220) facing each other, a third surface (230) and a fourth surface (240) facing each other, and a first opening (250) and a second opening (260) facing each other;
a first notch (215) in the first surface (210); and
a gas discharge portion (211) on the first surface (210) and overlapping the first notch (215),
wherein one side of the first surface (210) and the third surface (230) are connected to each other, and another side of the first surface (210) and the fourth surface (240) are connected to each other,
wherein one side of the second surface (220) and the third surface (230) are connected to each other, and another side of the second surface (220) and the fourth surface (240) are connected to each other, and
wherein the first surface (210) protrudes in a direction away from the second surface (220), and the first surface (210) has a curved structure.

9. The case (200) of a rechargeable battery (100) as claimed in claim 8, wherein:
the first notch (215) is in an interior surface (210b) of the first surface (210); and
the gas discharge portion (211) is on an exterior surface (210a) of the first surface (210) that is opposite to the interior surface (210b), optionally wherein the first notch (215) is at a highest point of the first surface (210).

10. The case (200) of a rechargeable battery (100) as claimed in claim 9, wherein the first notch (215) extends from one end of the first surface (210) to another end along a length direction of the body (200A).

11. The case (200) of a rechargeable battery (100) as claimed in any of claims 8 to 10, wherein a second notch (216) is in an exterior surface (210a) of the first surface (210), optionally wherein the second notch (216) extends from one end of the first surface (210) to another end along a length direction of the body (200A).

12. The case (200) of a rechargeable battery (100) as claimed in claim 11, wherein the second notch (216) overlaps the first notch (215).

13. The case (200) of a rechargeable battery (100) as claimed in claim 11 or 12, wherein the gas discharge portion (211) is a part of the second notch (216).

14. A method of manufacturing a case (200) for a rechargeable battery (100), the method comprising:
extruding a metal plate to form a body (200A) having a first surface (210) and a second surface (220) facing each other, a third surface (230) and a fourth surface (240) facing each other, and a first notch (215) in an interior surface (210b) of the first surface (210), the body (200A) forming an internal space and being open at both ends in a first direction; and
forming a gas discharge portion (211) by a press process, the gas discharge portion (211) being on an exterior surface (210a) of the first surface (210) and overlapping the first notch (215),
wherein, in process of extruding the metal plate, the first surface (210) protrudes in a direction away from the second surface (220) and has a curved structure.

15. The method of manufacturing a case (200) for a rechargeable battery (100) as claimed in claim 14, wherein the first notch (215) is formed at a highest point of the first surface (210).
